# EUROPEAN PATENT SPECIFICATION

(11) **EP 4 497 976 B1**
(45) Date of publication and mention of the grant of the patent: **09.09.2026**
(21) Application number: 24189702.4
(22) Date of filing: 19.07.2024
(51) Int. Cl.: F16H 37/04, F16H 3/093, F16H 3/00, F16H 3/08

(54) **IMPROVED TRANSMISSION ARCHITECTURE FOR AGRICULTURAL VEHICLES**
VERBESSERTE GETRIEBEARCHITEKTUR FÜR LANDWIRTSCHAFTLICHE FAHRZEUGE
ARCHITECTURE DE TRANSMISSION AMÉLIORÉE POUR VÉHICULES AGRICOLES

(30) Priority: 24.07.2023 IT 202300015480
(43) Date of publication of application: 29.01.2025
(73) Proprietor: CNH Industrial Italia S.p.A., 10156 Torino (IT)
(72) Inventor: MARZANI, Micael, 10156 Turin (IT); MENCARELLI, Marco, 10156 Turin (IT); FRULLI, Alberto, 10156 Turin (IT)
(74) Representative: CNH Industrial IP Department

(56) References cited:
- FR-A1- 2 325 857
- FR-A5- 2 109 790
- US-A- 6 044 720

## Description

### TECHNICAL FIELD

The present invention relates to a transmission architecture, in particular a transmission architecture for an off-road vehicle such as an agricultural vehicle and to a related method for controlling the gear shifting of such transmission.

### BACKGROUND OF THE INVENTION

Transmissions for off-road vehicles such as agricultural vehicles offer different configuration, for instance:
- manual shifted transmissions, in which all gears of the transmissions are engaged directly by the driver through lever mechanisms which command clutches, synchronizers and dog clutches to select the gear;
- semi-powershift transmission, in which some gears are engaged, manually or automatically, thanks to servo actuated mechanisms in powershift mode, i.e. by swapping the torque by a couple of clutches, and in which other gears are actuated by lever mechanisms which commands clutches, synchronizers and dog clutches to select the gear or by a servo-actuated mechanism which is not in powershift mode, i.e. which uses a single clutch and, when such clutch is opened, torque cannot pass through the transmission; and
- full powershift transmission, in which all gears of the transmission are engaged through servo actuated mechanism in powershift mode.

An important request that must be satisfied in modern mechanical transmission for agricultural vehicles is to have high efficiency across the full ground speed range, in order to improve the vehicle fuel consumption. In this respect a large use of wet clutches to build the semi-powershift or the full-powershift transmissions, generates more power losses inside the transmission when compared to the use of synchronizers and dog-clutches and, as consequence, a penalty of efficiency as consequence.

For this reason, in the art, the dual-clutch transmission, DCT, architecture is considered the most valuable layout for powershift transmissions in order to satisfy all the previous demands:
- it provides a high number of speed ratios with a mechanism that allow for a comfortable powershift (by swapping one couple of clutches); and
- it performs high efficiency, because a powershift layout is provided by only few couples of wet clutches accompanied by many synchronizers and dog-clutches.

Because of these advantages, recently DCT architecture has been applied in the field of the transmissions for agricultural vehicles.

However new requirements request higher speeds of the agricultural vehicles in a wide torque range. This leads to high encumbrance and high weight transmission.

Examples of prior art known transmission are shown in patent publications US6044720 A, FR2109790 A5 or FR2325857 A1. US6044720A discloses an architecture for a dual clutch transmission for a work vehicle that comprises an input stage, a gear ratio stage and a range gear ratio stage operatively connected one to the other with respect to an input shaft and an output shaft.

Therefore, the need is felt to solve the aforementioned drawbacks in order to maintain a wide range of transmittable torque, at high speeds while reducing encumbrances of the transmission, its manufacturing time and therefore its costs.

Aim of the present invention is to satisfy the above-mentioned needs in a cost-effective and optimized way.

### SUMMARY OF THE INVENTION

According to the invention, the aforementioned aim is reached by an architecture for a dual clutch transmission according to claim 1 and a related control method according to claim 9. The dependent claims show further advantageous embodiments of the invention.

### BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a transmission architecture according to the present invention;
- Figures 2 and 3 are schematic representations of the transmission architecture of figure 1 showing concerned power flows in two different exemplarily operative conditions; and
- Figure 4 is a table indicating the activation of elements of the transmission architecture according to the invention.

### DETAILED DESCRIPTION OF THE INVENTION

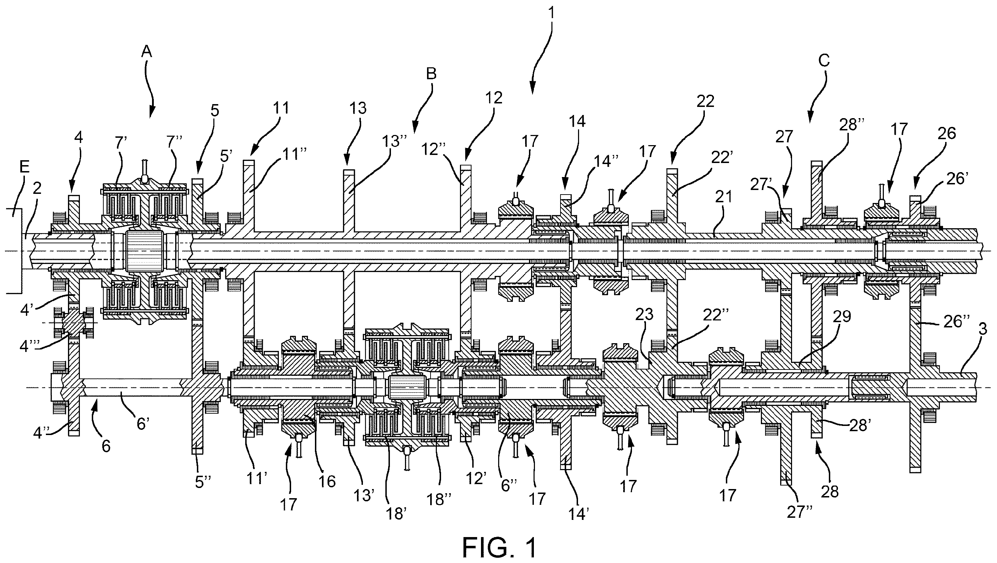

Figure 1 discloses a transmission 1 for an off-road vehicle, such as an agricultural vehicle, e.g. a tractor (not illustrated), comprising an input shaft 2, operatively connected to an engine shaft carried by a torque source E, such as an internal combustion engine of the work vehicle, and an output shaft 3, which can be coupled to a drive axle of the off-road vehicle.

The transmission 1 essentially comprises, operatively connected in series one to the other between input shaft 2 and output shaft 3, an input stage A, a gear ratio stage B, and a range gear ratio stage C.

The input stage A may be realized in different manner in order to vary rotational direction of input shaft 2 towards gear ratio B, i.e. between a forward motion and a rearward motion.

In the exemplarily disclosed embodiment, the input stage A comprises a first and a second gearings 4, 5 selectively connectable to a first support shaft 6. The first support shaft 6 provides input torque to the gear ratio stage B and is preferably divided into two portions, namely a first portion 6' and a second portion 6" that are coaxially and rotatably independent one with respect to the other.

The first gearing 4 comprises a first wheel 4' rotatably carried by input shaft 2 ,a second wheel 4" carried in a fixed manner by the first support shaft 6 and a third wheel 4‴ operatively connecting the first and the second wheels 4', 4" while the second gearing comprises a first wheel 5' rotatably carried by input shaft 2 and a second wheel 5" carried in a fixed manner by the first support shaft 6. The first wheels 4', 5' of gearings 4, 5 are selectively fixed to the input shaft 2 via respective first and second clutch means 7', 7", namely a rearward clutch 7' and a first forward clutch 7".

In detail, the first and second gearings 4, 5, 8 have different gear ratios and all insist on the first portion 6' of the first support shaft 6.

The gear ratio stage B comprises a plurality of gearings 11, 12, 13, 14 operatively interposed between the first support shaft 6 and the input shaft 2 and having a different size one with respect to the other to define respective gear ratios between the input shaft 2 and the output shaft 3.

In particular, the gear ratio stage B defines a first, a second, a third and a fourth gear ratios between the input and the output shafts 2, 3.

Accordingly, the first support shaft 6 carries four gears 11', 12', 13', 14' and the input shaft 2 carries, via a fourth shaft rotatably free carried about this latter, respective further four counter gears 11", 12", 13", 14" meshing with the four gears 11', 12', 13', 14' to define the aforementioned gearings 11, 12, 13, 14.

In particular, the first gear 11' has the smallest diameter, the fourth gear 14'has the biggest diameter and the second and third gears 12', 13' have respective diameters comprised between the ones of first and the fourth gears 11', 14'. The respective counter gears 11", 12", 13", 14" have a diameter corresponding the four gears 11', 12', 13', 14'.

In detail, all the gears 11', 12', 13', 14' rotatably carried by the either the first or the second portions 6', 6" of the first support shaft 6 selectively fixable thereon via selection means 17. The counter gears 11", 12", 13", 14" are instead in part fixedly carried on the fourth shaft supported by input shaft 2 or rotatably carried over this latter as described in the following.

In detail, according to invention:
- The gear 11' of the first gearing 11 is rotatably free carried by the first portion 6' of the first support shaft 6 and selectively connectable to this latter via selection means 17;
- The gear 13' of the third gearing 13 is rotatably free carried by the first portion 6' of the first support shaft 6and selectively connectable to the second portion 6" via selection means 17;
- The gears 12', 14' of the second and fourth gearings 12, 14 are rotatably carried by the second portion 6" of the first support shaft 6 and selectively fixed to this latter via selection means 17.

In particular, the first wheels 11', 13' of the first and third gearings 11, 13 are carried by a second support shaft 16 that connected together at rotation such two wheels 11', 13' and that is rotatably free carried by the first portion 6' of the first support shaft 6.

On the other side:
- The counter gears 11", 12", 13" of the first, second and second gearings 11, 12, 13 are fixedly carried by the fourth shaft supported by input shaft 2;
- The counter gear 14" of the fourth gearing 14 is rotatably free carried by fourth shaft supported by the input shaft 2 and can be selectively fixed to this latter via selection means 17.

In detail, gear ratio stage B further comprises third clutch means 18' configured to selectively connect together the second support shaft 16 to the first portion 6' of the first support shaft 6.

The gear ratio stage B further comprises fourth clutch means 18" configured to selectively connect the first wheel 12' of the second gearing 12 to the first portion 6' of the first support shaft 6.

Preferably the third and fourth clutch means 18', 18" are carried by the first support shaft 6, in particular by the first portion 6' thereof, and are axially faced one with respect to the other along the longitudinal axis thereof.

The range gear stage C adds a plurality of additional gear ratio that are combined with the gear ratios defined by the gear ratio stage. In the disclosed embodiment, three range gear ratio are provided.

In detail, architecture 1 comprises a third support shaft 21 that is rotatably carried by the input shaft 2. The third input shaft 21 is selectively connectable to the input shaft 2 via selection means 17 and connected via a gearing 22 to a sleeve 23.

In detail, gearing 22 comprises a first wheel 22' rigidly carried by the third support shaft 21 and a second wheel 22" rigidly carried by the sleeve 23.

Sleeve 23 is rotatably free carried between the second portion 6" of the first support shaft 6 and the output shaft 3, therefore being coaxial to these latter and it is selectively connectable via respective selection means 17 from one side to the first wheel 14' of the fourth gearing 14 of the gear ratio stage B and from the opposite side to the output shaft 3.

In an embodiment, the range gear ratio stage C comprises a first and a range gearings 26, 27 each comprising a first wheel 26', 27', and a second wheel 26", 27". In particular, first range gearing 26 is the so-called low range, the second range gearing 27 is the so-called medium range and the fast range is achieved as described above.

The first gearing 26 comprises a first wheel 26' that is rotatably free carried by the second intermediate shaft 21 and a second wheel 26" that is fixedly carried by the output shaft 3.

The second gearing 27 comprises a first wheel 27' that is fixedly carried by the second intermediate shaft 21 and a second wheel 27" that is rotatably free carried by the output shaft 3 and selectively fixable to this latter via selection means 17.

The range gear stage C further comprises a connection gearing 28 configured to operatively connect the second wheel 27" of the second gearing 27 to the first wheel 26' of the first gearing 26.

Such connection gearing 28 in particular comprises a first gear 28' that is rotatably free carried over the second intermediate shaft 21 and selectively connectable to the first gear 26' of the first gearing 26 via selection means 17 and a second wheel 28" rotatably free carried by the output shaft 3.

In particular, second wheel 28" is fixedly carried by a common support shaft 29 that fixedly carries also second wheel 27" of the second gearing 27 and that is rotatably free supported over the output shaft 3.

The aforementioned direct connection of the sleeve 23 to output shaft 3 provided a so-called fast range ratio.

The aforementioned selection means 17 can be realized in different manners such as synchronizer or dog clutches.

The above-described clutches 7', 7", 7‴, 18', 18" and selection means 17 can be selected by respective actuators (not shown) that are controlled by an electronic control unit (not shown). The electronic control unit controls said clutches or said control means by sending control electric signals directed to the respective clutches or selection means to be controlled.

The electronic control unit can be either the ECU of the vehicle or driveline ECU of the vehicle. The electronic control unit is configured to control the above cited elements of the transmission 1 as per direct input command of the user of the vehicle or in automatic way following the shift control logic deployed into a specific software code, which can be memorized into the electronic unit.

The vehicle may be provided by a dedicated control software code in the ECU of the transmission configured to recognize signals from sensors installed on the vehicle, e.g. the torque demand at the output shaft 3 and the speed of the engine input shaft 2, and automatically define the gearshift without any user intervention.

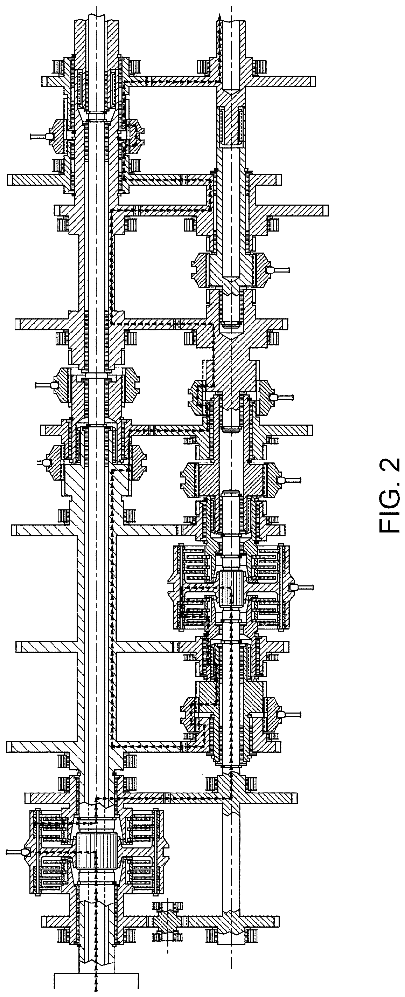

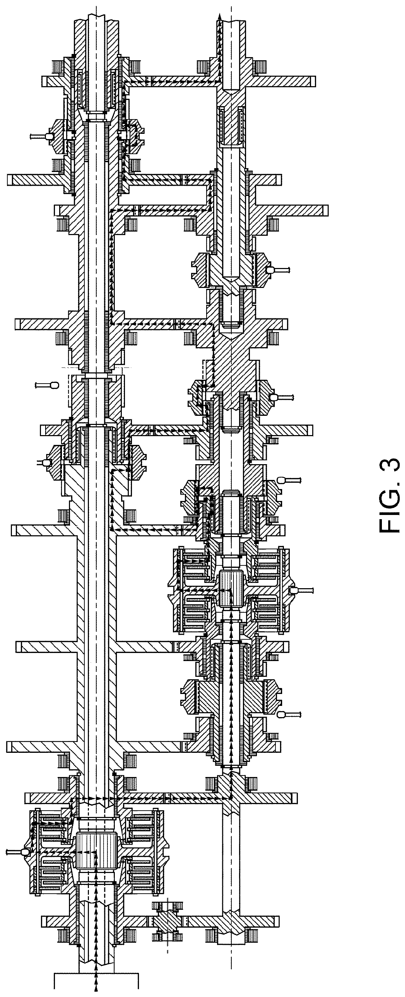

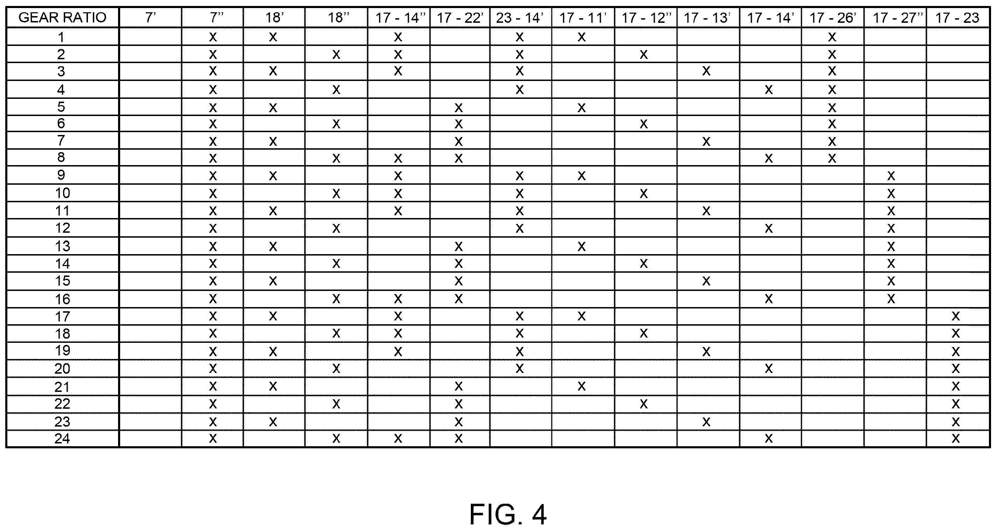

The operation of the transmission 1 according to the invention are described in the following making reference to figures 2, 3 and to table of figure 4.

The vehicle is driving, e.g. forward, in first-low gear ratio, i.e. in the configuration shown in figure 2.

In such configuration the rearward clutch 7" allows passage of torque from engine shaft via second gearing 5 towards first support shaft 6, namely its first portion 6', that is connected via third clutch means 18' to the second support shaft 16. Since first wheel 11' of the first gearing is selected by selection means 17, then torque flows towards input shaft 2 and via selection of second wheel 14" of the fourth gearing 14 and of sleeve 23 to the second portion 6" of first input shaft 6 flows towards the third support shaft 21. Here, since the first wheel 26' of the first range gearing 26 is selected, the torque passes via gearings 27 and 28 to the output shaft 3.

Supposing to pass to in second-low gear ratio, i.e. in the configuration shown in figure 3, it is sufficient to swap fourth and fifth clutches 18', 18" while preselecting the first gear 12' of the second gearing 12.

In such configuration the rearward clutch 7" allows passage of torque from engine shaft via second gearing 5 towards first support shaft 6, namely its first portion 6', that is connected via fourth clutch means 18" to the second portion 6" that is coupled to the first wheel 12' of the second gearing 12 via selection means and provides torque to the towards input shaft 2 and via selection of second wheel 14" of the fourth gearing 14 and of sleeve 23 to the second portion 6" of first input shaft 6 flows towards the third support shaft 21. Here, since the first wheel 26' of the first range gearing 26 is selected, the torque passes via gearings 27 and 28 to the output shaft 3.

The remaining gear ratios and derivable pre-selection of gears and swap of clutches are disclosed in the summarizing table of figure 4 and are not further reported for sake of brevity.

Due to the proposed eight gears ratio and the three range gear ratio, the transmission is provided with overall twenty four gear ratios, as listed both in forward and rearward motion.

The invention also comprises a method for operating a transmission 1 as described above for shifting from a gear ratio of the gear ratio stage B to a requested gear ratio of the gear ratio stage B and comprising the following steps:
- i) receiving an input for shifting from a gear ratio of gear ratio stage B to a requested gear ratio of the gear ratio stage B;
- ii) if the requested gear ratio foresees the use of the same initial gear of the gear ratio stage B, then proceed to step v) otherwise proceed with steps iii) and iv);
- iii) engage by selection means 17 a further gear involved in the requested gear ratio to the second range gear shaft;
- iv) swap clutches 7', 7", 18', 18" involved in the torque transmission to pass from the initial gear to the further gear;
- v) swap clutches 7', 7", 18', 18" involved in the torque transmission to pass to the requested gear ratio.

In view of the foregoing, the advantages of a transmission architecture 1 according to the invention and the related method are apparent.

The proposed transmission architecture allows to reduce the number of shafts and in particular of countershafts that are present in the known DCT arrangement thereby providing a high number of gear ratio and reducing weight, encumbrance and costs for producing the transmission.

Indeed, thanks to the arrangement of the even/odd clutches in an axial alignment, it is possible to avoid the use of countershaft and manages the torque into twenty-four gear ratios in a very compact manner.

Moreover, since shafts and gears are reduced, the overall number of components is reduced and then the manufacturing costs are contained.

Clearly, the inertia of the transmission architecture is further reduces since the torque transmission paths are shorter then the ones of known DCT arrangements.

It is clear that modifications can be applied to the described transmission 1 which do not extend beyond the scope of protection defined by the appended claims.

For example, the control and typology of selection means 17 may be implemented with any typology of control, e.g. a hydraulic, electric or pneumatic in altemative or in combinations.

## Claims

1. An architecture for a dual clutch transmission (1) for a work vehicle, said architecture comprising:
• an input shaft (2) configured to be coupled to a power source (E) of said work vehicle,
• an output shaft (3) configured to be connected to a driving axle of said work vehicle,
• an input stage (A), a gear ratio stage (B) and a range gear ratio stage (C) operatively connected one to the other with respect to said input shaft (2) and said output shaft (3), wherein said input stage (A) comprises a first transmission shaft (6) comprising a first portion (6'), a first and a second gearings (4, 5) operatively interposed between the input shaft (2) and said first portion (6'), a first and a second clutches (7', 7") configured to select one between said first and second gearings (4, 5) between said input shaft (2) and said first portion (6'),
said gear ratio stage (B) comprise a second portion (6") of said first support shaft (6) independent to said first portion (6') and first, second, third and fourth gearings (11, 12, 13, 14) operatively interposed between said first or second portions (6', 6") and a fourth shaft rotatably carried by the input shaft (2) and operatively connected to said output shaft (3) to define different gear ratios between said input shaft (2) and said output shaft (3),
wherein:
the gears (11', 13') of the first and third gearings (11, 13) are rotatably free carried by a second support shaft (16) and selectively connectable to this latter via selection means (17);
the gears (12', 14') of the second and fourth gearings (12, 14) are rotatably carried by the second portion (6") of the first support shaft (6) and selectively fixable to this latter via selection means (17).
and wherein:
• the counter gears (11", 12", 13") of the first, second and third gearings (11, 12, 13) are fixedly carried by said fourth shaft;
• the counter gear (14") of the fourth gearing (14) is rotatably free carried by said fourth shaft and can be selectively fixed to this latter via selection means (17). said architecture (1) further comprising a third support shaft (21) and a sleeve (23), said sleeve (23) being rotatably carried between said second portion (6") and said output shaft (3) and configured to be selectively connected to said gear (14') of said fourth gearing (14) via selection means (17), said third support shaft (21) being rotatably carried by said input shaft (2) and connected to said sleeve (23) via a gearing (22) and operatively connected by said range stage (C) to said output shaft (3), said gear ratio stage (B) comprising a third and a fourth clutch means (18', 18") configured to respectively selectively couple said second support shaft (16) to said first portion (6') and to couple the gear (12) of the second gearing (12) to said first portion (6').

2. Architecture according to claim 1, wherein said third and fourth clutch means (18' 18") are coaxial to said first support shaft (6).

3. Architecture according to claim 1 or 2, wherein said gearing (22) comprises a first wheel (22') fixedly carried by said third support shaft (21) and selectively connected to said counter gear (14") of said fourth gearing (14) and a second gear (22") fixedly carried by said sleeve (23).

4. Architecture according to claim 2 or 3, wherein said range gear stage (C) comprises a fifth and sixth gearings (26, 27), said fifth gearing (26) comprising a fifth gear (26') rotatably free carried by said third support shaft (21) and selectively operatively connected via selection means (17) to said third support shaft (21) and a fifth counter gear (26") fixedly carried by said output shaft (3), wherein said sixth gearing (27) comprises a sixth gear (27') fixedly carried by said third intermediate shaft (27) and a sixth counter gear (27") rotatably free carried by said output shaft (3) and selectively connectable via selection means (17) to this latter.

5. Architecture according to claim 4, wherein range stage (C) comprises a seventh gearing (28) comprising a seventh gear (28') rotatably carried by said third support shaft (21) and selectively connected to said fifth gear (26') of said fifth gearing (26) and a seventh counter gear (28") rotatably carried by said output shaft (3) via a support shaft (29), said support shaft (29) carrying fixedly said sixth counter gear (27") of said sixth gearing (27) and being rotatably carried by said output shaft (3).

6. Architecture according to any of the preceding claims, further comprising selection means (17) for selectively coupling said sleeve (23) to said output shaft (3).

7. Architecture according to any of the preceding claims, wherein said selection means (17) comprises a synchronizer or a dog clutch.

8. Architecture according to any of the preceding claims further comprising a control unit configured to control actuators configured to regulate the operation of said clutch means (7', 7", 18', 18") and said selection means (17).

9. Method for operating an architecture (1) as claimed in claim 8 for shifting from a gear ratio of the gear ratio stage (B) to a requested gear ratio of the gear ratio stage (B) and comprising the following steps:
• i) receiving an input for shifting from a gear ratio of gear ratio stage (B) to a requested gear ratio of the gear ratio stage (B);
• ii) if the requested gear ratio foresees the use of the same initial gear of the gear ratio stage (B), then proceed to step v) otherwise proceed with steps iii) and iv);
• iii) engage by selection means (17) a further gear involved in the requested gear ratio to the second range gear shaft;
• iv) swap clutch means (7', 7", 18', 18") involved in the torque transmission to pass from the initial gear to the further gear;
• v) swap clutch means (7', 7", 18', 18") involved in the torque transmission to pass to the requested gear ratio.

## Patentansprüche

1. Architektur für ein Doppelkupplungsgetriebe (1) für ein Arbeitsfahrzeug, wobei die Architektur umfasst:
• eine Antriebswelle (2), die konfiguriert ist, um an eine Energiequelle (E) des Arbeitsfahrzeugs gekoppelt zu werden,
• eine Abtriebswelle (3), die konfiguriert ist, um mit einer Antriebsachse des Arbeitsfahrzeugs verbunden zu werden,
• eine Eingangsstufe (A), eine Übersetzungsstufe (B) und eine Bereichsübersetzungsstufe (C), die in Bezug auf die Antriebswelle (2) und die Abtriebswelle (3) funktionell miteinander verbunden sind,
wobei die Eingangsstufe (A) eine erste Getriebewelle (6) umfasst, umfassend einen ersten Abschnitt (6'), eine erste und eine zweite Verzahnung (4, 5), die funktionell zwischen der Antriebswelle (2) und dem ersten Abschnitt (6') angeordnet sind, eine erste und eine zweite Kupplung (7', 7''), die konfiguriert sind, um eines unter der ersten und der zweiten Verzahnung (4, 5) zwischen der Antriebswelle (2) und dem ersten Abschnitt (6') auszuwählen,
wobei die Übersetzungsstufe (B) einen zweiten Abschnitt (6") der ersten Stützwelle (6) unabhängig von dem ersten Abschnitt (6') und erste, zweite, dritte und vierte Verzahnungen (11, 12, 13, 14) umfasst, die funktionell zwischen dem ersten oder zweiten Abschnitt (6', 6") und einer vierten Welle eingefügt sind, die drehbar von der Antriebswelle (2) getragen wird und funktionell mit der Abtriebswelle (3) verbunden ist, um unterschiedliche Übersetzungsverhältnisse zwischen der Antriebswelle (2) und der Abtriebswelle (3) zu definieren,
wobei:
• die Zahnräder (11', 13') der ersten und dritten Verzahnung (11, 13) frei drehbar auf einer zweiten Stützwelle (16) gelagert und über Auswahlmittel (17) wahlweise mit dieser letzteren verbindbar sind;
• die Zahnräder (12', 14') der zweiten und vierten Verzahnung (12, 14) drehbar auf dem zweiten Abschnitt (6'') der ersten Stützwelle (6) gelagert und über Auswahlmittel (17) wahlweise an dieser letzteren fixierbar sind.
und wobei:
• die Vorgelegeräder (11", 12", 13") der ersten, zweiten und dritten Verzahnung (11, 12,13) fest von der vierten Welle getragen werden;
• das Vorgelegerad (14") der vierten Verzahnung (14) von der vierten Welle frei drehbar getragen wird und wahlweise mittels Auswahlmitteln (17) an dieser letzteren fixiert werden kann.
wobei die Architektur (1) ferner eine dritte Stützwelle (21) und eine Hülse (23) umfasst, wobei die Hülse (23) drehbar zwischen dem zweiten Abschnitt (6") und der Abtriebswelle (3) gelagert ist und konfiguriert ist, um über Auswahlmittel (17) selektiv mit dem Zahnrad (14') der vierten Verzahnung (14) verbunden zu werden, wobei die dritte Stützwelle (21) drehbar von der Antriebswelle (2) gelagert wird und über eine Verzahnung (22) mit der Hülse (23) verbunden ist und durch die Bereichsstufe (C) funktionell mit der Abtriebswelle (3) verbunden ist,
die Übersetzungsstufe (B), umfassend ein drittes und ein viertes Kupplungsmittel (18', 18''), die konfiguriert sind, um jeweils selektiv die zweite Stützwelle (16) mit dem ersten Abschnitt (6') zu koppeln und das Zahnrad (12) der zweiten Verzahnung (12) mit dem ersten Abschnitt (6') zu koppeln.

2. Architektur nach Anspruch 1, wobei die dritten und vierten Kupplungsmittel (18' 18") koaxial zu der ersten Stützwelle (6) sind.

3. Architektur nach Anspruch 1 oder 2, wobei die Verzahnung (22) ein erstes Rad (22'), das fest von der dritten Stützwelle (21) getragen wird und selektiv mit dem Vorgelegerad (14") der vierten Verzahnung (14) verbunden ist, und ein zweites Zahnrad (22"), das fest von der Hülse (23) getragen wird, umfasst.

4. Architektur nach Anspruch 2 oder 3, wobei die Bereichsgetriebestufe (C) eine fünfte und sechste Verzahnung (26, 27) umfasst, wobei die fünfte Verzahnung (26) ein fünftes Zahnrad (26'), das frei drehbar von der dritten Stützwelle (21) getragen wird und über Auswahlmittel (17) selektiv funktionell mit der dritten Stützwelle (21) verbunden ist, und ein fünftes Vorgelegerad (26") umfasst, das fest von der Abtriebswelle (3) getragen wird, wobei die sechste Verzahnung (27) ein sechstes Zahnrad (27'), das fest von der dritten Zwischenwelle (27) getragen wird, und ein sechstes Vorgelegerad (27") umfasst, das frei drehbar von der Abtriebswelle (3) getragen wird und über Auswahlmittel (17) selektiv mit dieser letzteren verbindbar ist.

5. Architektur nach Anspruch 4, wobei Bereichsstufe (C) eine siebte Verzahnung (28) umfasst, umfassend ein siebtes Zahnrad (28'), das drehbar durch die dritte Stützwelle (21) getragen wird und selektiv mit dem fünften Zahnrad (26') der fünften Verzahnung (26) verbunden ist, und ein siebtes Vorgelegerad (28"), das über eine Stützwelle (29) drehbar durch die Abtriebswelle (3) getragen wird, wobei die Stützwelle (29) das sechste Vorgelegerad (27") der sechsten Verzahnung (27) fest trägt und drehbar durch die Abtriebswelle (3) getragen wird.

6. Architektur nach einem der vorstehenden Ansprüche, ferner umfassend Auswahlmittel (17) zum wahlweisen Koppeln der Hülse (23) mit der Abtriebswelle (3).

7. Architektur nach einem der vorstehenden Ansprüche, wobei das Auswahlmittel (17) eine Synchronisiereinrichtung oder eine Klauenkupplung umfasst.

8. Architektur nach einem der vorstehenden Ansprüche, ferner umfassend eine Steuereinheit, die konfiguriert ist, um Aktuatoren zu steuern, die konfiguriert sind, um den Betrieb der Kupplungsmittel (7', 7", 18', 18") und der Auswahlmittel (17) zu regeln.

9. Verfahren zum Betreiben einer Architektur (1) nach Anspruch 8 zum Schalten von einem Übersetzungsverhältnis der Übersetzungsstufe (B) in ein angefordertes Übersetzungsverhältnis der Übersetzungsstufe (B) und umfassend die folgenden Schritte:
• i) Empfangen einer Eingabe zum Schalten von einem Übersetzungsverhältnis der Übersetzungsstufe (B) auf ein angefordertes Übersetzungsverhältnis der Übersetzungsstufe (B);
• ii) wenn das angeforderte Übersetzungsverhältnis die Verwendung desselben anfänglichen Gangs der Übersetzungsstufe (B) vorsieht, dann Fortfahren mit Schritt v), andernfalls Fortfahren mit den Schritten iii) und iv);
• iii) In-Eingriff-Bringen durch Auswahlmittel (17) eines weiteren Zahnrads, das an dem angeforderten Übersetzungsverhältnis beteiligt ist, mit der zweiten Bereichsgetriebewelle;
• iv) Wechseln der Kupplungsmittel (7', 7", 18', 18"), die an der Drehmomentübertragung beteiligt sind, um von dem anfänglichen Gang in den weiteren Gang zu schalten;
• v) Wechseln der Kupplungsmittel (7', 7", 18', 18"), die an der Drehmomentübertragung beteiligt sind, um in das angeforderte Übersetzungsverhältnis zu schalten.

## Revendications

1. Architecture pour une transmission à double embrayage (1) pour un véhicule de travail, ladite architecture comprenant :
• un arbre d'entrée (2) configuré pour être accouplé à une source d'alimentation (E) dudit véhicule de travail,
• un arbre de sortie (3) configuré pour être relié à un essieu moteur dudit véhicule de travail,
• un étage d'entrée (A), un étage de rapport de vitesse (B) et un étage de rapport de vitesse de plage (C) reliés de manière fonctionnelle l'un à l'autre par rapport audit arbre d'entrée (2) et audit arbre de sortie (3),
dans laquelle ledit étage d'entrée (A) comprend un premier arbre de transmission (6) comprenant une première partie (6'), des premier et deuxième engrenages (4, 5) interposés de manière fonctionnelle entre l'arbre d'entrée (2) et ladite première partie (6'), des premier et second embrayages (7', 7") configurés pour sélectionner l'un parmi lesdits premier et deuxième engrenages (4, 5) entre ledit arbre d'entrée (2) et ladite première partie (6'),
ledit étage de rapport d'engrenage (B) comprend une seconde partie (6") dudit premier arbre de support (6) indépendamment de ladite première partie (6') et comprend des premier, deuxième, troisième et quatrième engrenages (11, 12, 13, 14) interposés de manière fonctionnelle entre lesdites première ou seconde parties (6', 6") et un quatrième arbre porté en rotation par l'arbre d'entrée (2) et relié de manière fonctionnelle audit arbre de sortie (3) pour définir différents rapports de vitesse entre ledit arbre d'entrée (2) et ledit arbre de sortie (3),
dans laquelle :
• les pignons (11', 13') des premier et troisième engrenages (11, 13) sont portés de manière libre en rotation par un deuxième arbre de support (16) et pouvant être reliés sélectivement à celui-ci par l'intermédiaire de moyens de sélection (17) ;
• les pignons (12', 14') des deuxième et quatrième engrenages (12, 14) sont portés en rotation par la seconde partie (6") du premier arbre de support (6) et peuvent être fixés sélectivement à celui-ci par l'intermédiaire de moyens de sélection (17),
et dans laquelle :
• les pignons de renvoi (11" ,12", 13") des premier, deuxième et troisième engrenages (11, 12, 13) sont portés de manière fixe par ledit quatrième arbre ;
• le pignon de renvoi (14") du quatrième engrenage (14) est porté de manière libre en rotation par ledit quatrième arbre et peut être fixé sélectivement à celui-ci par l'intermédiaire de moyens de sélection (17),
ladite architecture (1) comprenant en outre un troisième arbre de support (21) et un manchon (23), ledit manchon (23) étant porté en rotation entre ladite seconde partie (6") et ledit arbre de sortie (3) et configuré pour être sélectivement relié audit pignon (14') dudit quatrième engrenage (14) par l'intermédiaire de moyens de sélection (17), ledit troisième arbre de support (21) étant porté en rotation par ledit arbre d'entrée (2) et relié audit manchon (23) par l'intermédiaire d'un engrenage (22) et relié de manière fonctionnelle par ledit étage de plage (C) audit arbre de sortie (3),
ledit étage de rapport de vitesse (B) comprenant des troisième et quatrième moyens d'embrayage (18', 18") configurés pour accoupler respectivement sélectivement ledit second arbre de support (16) à ladite première partie (6') et pour accoupler le pignon (12) du second engrenage (12) à ladite première partie (6').

2. Architecture selon la revendication 1, dans laquelle lesdits troisième et quatrième moyens d'embrayage (18' 18") sont coaxiaux audit premier arbre de support (6).

3. Architecture selon la revendication 1 ou 2, dans laquelle ledit engrenage (22) comprend une première roue (22') portée de manière fixe par ledit troisième arbre de support (21) et reliée sélectivement audit pignon de renvoi (14") dudit quatrième engrenage (14) et un second pignon (22") porté de manière fixe par ledit manchon (23).

4. Architecture selon la revendication 2 ou 3, dans laquelle ledit étage d'engrenage de plage (C) comprend des cinquième et sixième engrenages (26, 27), ledit cinquième engrenage (26) comprenant un cinquième pignon (26') porté de manière libre en rotation par ledit troisième arbre de support (21) et sélectivement relié de manière fonctionnelle par l'intermédiaire de moyens de sélection (17) audit troisième arbre de support (21) et un cinquième pignon de renvoi (26") porté de manière fixe par ledit arbre de sortie (3), dans laquelle ledit sixième engrenage (27) comprend un sixième pignon (27') porté de manière fixe par ledit troisième arbre intermédiaire (27) et un sixième pignon de renvoi (27") porté de manière libre en rotation par ledit arbre de sortie (3) et pouvant être relié sélectivement à celui-ci par l'intermédiaire de moyens de sélection (17).

5. Architecture selon la revendication 4, dans laquelle l'étage de plage (C) comprend un septième engrenage (28) comprenant un septième pignon (28') porté en rotation par ledit troisième arbre de support (21) et relié sélectivement audit cinquième pignon (26') dudit cinquième engrenage (26) et un septième pignon de renvoi (28") porté en rotation par ledit arbre de sortie (3) par l'intermédiaire d'un arbre de support (29), ledit arbre de support (29) portant de manière fixe ledit sixième pignon de renvoi (27") dudit sixième engrenage (27) et étant porté en rotation par ledit arbre de sortie (3).

6. Architecture selon l'une quelconque des revendications précédentes, comprenant en outre des moyens de sélection (17) pour accoupler sélectivement ledit manchon (23) audit arbre de sortie (3).

7. Architecture selon l'une quelconque des revendications précédentes, dans laquelle ledit moyen de sélection (17) comprend un synchroniseur ou un embrayage à griffes.

8. Architecture selon l'une quelconque des revendications précédentes, comprenant en outre une unité de commande configurée pour commander des actionneurs configurés pour réguler le fonctionnement desdits moyens d'embrayage (7', 7", 18', 18") et dudit moyen de sélection (17).

9. Procédé permettant le fonctionnement d'une architecture (1) selon la revendication 8 pour passer d'un rapport de vitesse de l'étage de rapport de vitesse (B) à un rapport de vitesse demandé de l'étage de rapport de vitesse (B) et comprenant les étapes suivantes :
• i) la réception d'une entrée pour passer d'un rapport de vitesse de l'étage de rapport de vitesse (B) à un rapport de vitesse demandé de l'étage de rapport de vitesse (B) ;
• ii) si le rapport de vitesse demandé prévoit l'utilisation du même rapport initial de l'étage de rapport de vitesse (B), passer à l'étape v) sinon, passer aux étapes iii) et iv) ;
• iii) mettre en contact, par un moyen de sélection (17), un autre pignon impliqué dans le rapport de vitesse demandé avec l'arbre de pignon de plage de la seconde plage ;
• iv) intervertir les moyens d'embrayage (7', 7", 18', 18") impliqués dans la transmission de couple pour passer du rapport initial au rapport suivant ;
• v) intervertir les moyens d'embrayage (7', 7", 18', 18") impliqués dans la transmission de couple pour passer au rapport de vitesse demandé.
